# EUROPÄISCHE PATENTSCHRIFT

(11) **EP 2 008 956 B1**
(45) Veröffentlichungstag und Bekanntmachung des Hinweises auf die Patenterteilung: **30.09.2015**
(21) Anmeldenummer: 08011694.0
(22) Anmeldetag: 27.06.2008
(51) Int. Cl.: B65H 5/02, B65H 9/14, B65H 9/06, B65H 9/10, B65G 21/20

(54) **Vorrichtung zum positionsgenauen Zuführen von tafelförmigen Gütern sowie entsprechendes Verfahren**
Device for supplying exactly positioned plate-like goods and corresponding method
Dispositif d'introduction exacte de marchandises en forme de plaques et procédé correspondant

(30) Priorität: 28.06.2007 DE 102007031115
(43) Veröffentlichungstag der Anmeldung: 31.12.2008
(73) Patentinhaber: KBA-MetalPrint GmbH, 70435 Stuttgart (DE)
(72) Erfinder: Eble, Markus, 70199 Stuttgart (DE); Gericke, Stefan, 73760 Ostfildern (DE)
(74) Vertreter: Stiel, Jürgen

(56) Entgegenhaltungen:
- EP-A2- 1 749 773
- WO-A2-03/066490
- DE-U1- 20 000 247
- FR-A5- 2 041 896

## Beschreibung

Die Erfindung betrifft eine Vorrichtung zum positionsgenauen Zuführen von tafelförmigen Gütern, insbesondere Blechtafeln, an Lackier-und/oder Druckmaschinen.

Aus der DE 10 2005 037 128 ist ein Saugriementransportsystem einer Blechdruckmaschine oder Blechlackiermaschine bekannt, die ein Zuführtrum zum Zuführen von Blechtafeln aufweist. Das Zuführtrum wirkt mit einem nachfolgenden Vorderkantenanschlagtrum zusammen, sodass vom Zuführtrum angelieferte Blechtafeln mit ihrer Vorderkante gegen die Anschläge des Vorderkantenanschlagtrums treten. Im Zuge des weiteren Transports werden die Tafeln mit ihren Vorderkanten gegen Anlegemarken einer Anlegetrommel gedrängt und dadurch ausgerichtet. Anschließend gelangen die Blechtafeln in einen Druck- beziehungsweise Lackierspalt zwischen einem Druckbeziehungsweise Lackierzylinder und einem Gegendruckzylinder. Die Ausrichtgenauigkeit der Blechtafeln ist in der Praxis verbesserungswürdig, sodass nicht immer das gewünschte Ergebnis beim Bedrucken beziehungsweise Lackieren erzielt wird.

Der Erfindung liegt daher die Aufgabe zugrunde, eine Vorrichtung zum positionsgenauen Zuführen von tafelförmigen Gütern, insbesondere Blechtafeln, an Lackier- und/oder Druckmaschinen zu schaffen, mit der die Güter hochgenau und insbesondere bei hoher Geschwindigkeit ausrichtbar sind. Ferner soll ein einfacher und kostengünstiger Aufbau erzielt werden.

Diese Aufgabe wird erfindungsgemäß durch eine Vorrichtung gelöst, mit mindestens einer umlaufenden, ebenen, ersten Transportstrecke und mit mindestens einer umlaufenden, ersten Ausrichteinrichtung für eine grobe Ausrichtung der Güter, und mit mindestens einer umlaufenden, ebenen, zweiten Transportstrecke sowie mit mindestens einer umlaufenden, zweiten Ausrichteinrichtung für eine nach der bereits erfolgten Ausrichtung erfolgende feinere Ausrichtung der Güter, sowie mit mindestens einer die Güter zumindest zeitweise in Bezug auf mindestens eine der Transportstrecken, insbesondere in Bezug auf die erste Transportstrecke, fixierenden, umlaufenden Halteeinrichtung. Aufgrund dieser Ausgestaltung lassen sich die tafelförmigen Güter vorzugsweise von einem Stapel mittels eines Anlegers vereinzeln und über die erfindungsgemäße Vorrichtung hochgenau der Lackier- und/oder Druckmaschine zuführen. Durch die beiden ebenen, umlaufenden Transportstrecken und die jeder Umlaufeinrichtung zugeordnete Ausrichteinrichtung sowie die zumindest temporäre Fixierung der Güter in Bezug auf mindestens eine der Transportstrecken wird ein sehr ruhiger Lauf und eine ruhige Übergabe der Güter, insbesondere von der einen Umlaufeinrichtung auf die andere Umlaufeinrichtung erzielt. Dabei steht, insbesondere auch eine hinreichend lange Übergabezeit der Güter, vorzugsweise von der einen Umlaufeinrichtung auf die andere Umlaufeinrichtung, zur Verfügung, sodass eine reproduzierbar präzise Güterausrichtung realisiert wird. Die mindestens eine Halteeinrichtung hält die Tafel herunter und verhindert ein "Hochspringen", was sonst insbesondere beim Ausrichten erfolgen könnte. Während im Stand der Technik für eine Übergabe der Tafeln vom Vorderkantenanschlagtrum auf die Greifertrommel nur eine äußerst kurze Zeitspanne zur Verfügung steht und die Greifertrommel die Anlegemarke auf einer Kreisbahn führt, also - anders als bei der Erfindung - keine ebene Transportstrecke vorliegt, ist bei der stets ebenen Zuführung beim Gegenstand der Erfindung eine entscheidend höhere Güterausrichtgenauigkeit und höhere Geschwindigkeit erzielt. Die beiden (und gegebenenfalls weitere) ebenen Transportstrecken des Gegenstandes der Erfindung liegen bevorzugt in derselben Ebene.

Nach einer Weiterbildung der Erfindung ist mindestens eine weitere, umlaufende, insbesondere dritte Transportstrecke und mindestens eine weitere, umlaufende, insbesondere dritte Ausrichteinrichtung vorgesehen.

Bevorzugt ist mindestens eine weitere Halteeinrichtung, insbesondere eine zweite Halteeinrichtung, vorgesehen, die die Güter zumindest zeitweise in Bezug auf mindestens eine der Transportstrecken, insbesondere in Bezug auf die zweite Transportstrecke, fixiert.

Es ist vorteilhaft, wenn die erste Transportstrecke und die erste Ausrichteinrichtung einer ersten Umlaufeinrichtung angehören. Ferner kann bevorzugt vorgesehen sein, dass die zweite Transportstrecke und die zweite Ausrichteinrichtung einer zweiten Umlaufeinrichtung angehören. Es ist ferner vorteilhaft, wenn die dritte Transportstrecke und die dritte Ausrichteinrichtung einer dritten Umlaufeinrichtung angehören. Ist eine dritte Umlaufeinrichtung vorgesehen, so wirkt diese mit der zweiten Umlaufeinrichtung derart zusammen, dass sie die Tafeln entsprechend feiner ausrichtet. Es ist verständlich, dass der Gegenstand der Erfindung nicht durch diese dritte Umlaufeinrichtung beziehungsweise die dritte Transportstrecke und die dritte Ausrichteinrichtung beschränkt ist, sondern dass sich gegebenenfalls noch eine weitere Umlaufeinrichtung oder gegebenenfalls noch weitere Umlaufeinrichtungen beziehungsweise noch mindestens eine weitere Transportstrecke und mindestens eine weitere Ausrichteinrichtung oder gegebenenfalls sogar noch weitere Transportstrecken und noch weitere Ausrichteinrichtungen anschließen können. Je mehr derartige Einrichtungen vorgesehen sind, desto sanfter und präziser werden die Güter, insbesondere Tafeln, ausgerichtet. Entsprechendes gilt für die Anzahl der Halteeinrichtungen, das heißt, ist eine entsprechend hohe Anzahl von Ausrichtstufen vorgesehen, so ist auch eine entsprechende Anzahl von Halteeinrichtungen vorgesehen, um die Tafeln zu halten, insbesondere flach zu halten, sodass sie beispielsweise bei einem Anliegen mit ihren Vorderkanten an Ausrichtanschlägen flach liegend gehalten sind und nicht "hochspringen" können.

Ferner ist es vorteilhaft, wenn mindestens eine der Ausrichteinrichtungen eine Vorderkanten- und/oder eine Hinterkantenausrichteinrichtung ist. Die Güter lassen sich demzufolge durch Anlage ihrer Vorderkanten und/oder durch Anlage ihrer Hinterkanten an entsprechende Anschläge ausrichten.

Eine Weiterbildung der Erfindung sieht vor, dass die Halteeinrichtung und/oder mindestens eine der Halteeinrichtungen eine Unterdruckeinrichtung und/oder Magneteinrichtung, insbesondere Elektromagneteinrichtung, ist. Handelt es sich bei den tafelförmigen Gütern um nicht mittels einer Magnetkraft zu haltende Güter, so wird die Haltewirkung durch die Unterdruckeinrichtung realisiert. Selbstverständlich lassen sich auch ferromagnetische Materialien mittels der Unterdruckeinrichtung halten. Im letzteren Fall ist es jedoch auch möglich, dass eine Magneteinrichtung, insbesondere eine Elektromagneteinrichtung, vorgesehen ist, um die Güter halten zu können. Eine Elektromagneteinrichtung hat den Vorteil, dass die magnetische Wirkung ein- und ausschaltbar ist. Das Ein- und Ausschalten der Haltekraft ist auch mittels der erwähnten Unterdruckeinrichtung möglich, wenn durch geeignete Mittel der Unterdruck an- und abgeschaltet wird.

Es ist vorteilhaft, wenn die Halteeinrichtung oder mindestens eine der Halteeinrichtungen mindestens einer der Umlaufeinrichtungen zugeordnet ist. Dies bedeutet, dass eine Zuordnung der Halteeinrichtung oder Halteeinrichtungen zu der Umlaufeinrichtung derart besteht, dass sie sich im Bereich der Umlaufeinrichtung befindet oder sogar ein Bestandteil der Umlaufeinrichtung bildet. Die Halteeinrichtung ist bevorzugt der ersten Umlaufeinrichtung zugeordnet.

Mindestens eine der Umlaufeinrichtungen ist bevorzugt als mindestens ein Trum ausgebildet. Insbesondere ist die erste Umlaufeinrichtung als mindestens ein erstes Trum ausgebildet. Dabei kann mindestens ein Trum als ein Riementrum ausgebildet sein. Insbesondere ist das erste Trum als erstes Riementrum ausgebildet. Mindestens ein Riementrum zur Ausbildung von mindestens einer Halteeinrichtung kann vorzugsweise zumindest bereichsweise als Saugriementrum ausgebildet sein. Insbesondere ist das erste Riementrum zur Ausbildung der Halteeinrichtung zumindest bereichsweise als Saugriementrum ausgebildet.

Die zweite Umlaufeinrichtung weist bevorzugt mindestens ein zweites Trum auf. Das zweite Trum ist insbesondere als zweites Riementrum ausgebildet.

Gemäß der Erfindung weist mindestens eine Umlaufeinrichtung mindestens einen Schlitten auf. Insbesondere ist die zweite Umlaufeinrichtung mit mindestens einem Schlitten versehen. Bei dem Schlitten handelt es sich um ein Element, das entlang einer Führung auf einer umlaufenden Bahn geführt ist.

Erfindunsgemäß weist der Schlitten mindestens eine Haltevorrichtung und/oder mindestens eine Ausrichteinrichtung für die Güter auf. Dabei kann insbesondere vorgesehen sein, dass die Haltevorrichtung oder mindestens eine der Haltevorrichtungen eine Unterdruckvorrichtung und/oder eine Magnetvorrichtung, insbesondere Elektromagnetvorrichtung, ist. Die bereits erwähnte Bahn für den Schlitten kann vorzugsweise derart gewählt sein, dass der Schlitten entlang mindestens einer Rundbogenführung geführt ist. Insbesondere weist die Rundbogenführung zwei 180°-Bogenführungen mit dazwischen liegenden Geradführungen auf. Demzufolge liegt eine stadionförmige Führungsbahn vor. Der Schlitten ist bevorzugt mit mindestens einem Trum, insbesondere mit dem zweiten Trum, gekuppelt. Mindestens ein Trum ist bevorzugt ein Saugriementrum, mit dem unter Zwischenschaltung mindestens eines Schlittens die Güter mittels mindestens einer Haltevorrichtung saugend gehalten werden. Insbesondere ist vorgesehen, dass das zweite Trum mindestens ein Saugriemen ist, mit dem unter Zwischenschaltung des Schlittens die Güter mittels der Haltevorrichtung saugend gehalten werden. Das erwähnte Trum ist mit dem Schlitten gekuppelt und treibt demzufolge den Schlitten entlang der Rundbogenführung an, wobei im Falle der Ausbildung des Trums als Saugriemen die vom Saugriemen ausgehende Saugkraft über den Schlitten zu einer Wirkstelle am Schlitten geführt wird, an der die Güter angesaugt werden.

Alle zuvor erwähnten Güterhaltemaßnahmen, die sich auf das Halten per Unterdruck beziehen, lassen sich entsprechend mit Magneteinrichtungen bewirken, sodass sich alle vorstehenden Ausführungen auch entsprechend auf Magnetvorrichtungen beziehen.

Eine Weiterbildung der Erfindung sieht vor, dass die erste und/oder die zweite Ausrichteinrichtung und/oder eine der Ausrichteinrichtungen als mindestens ein Ausrichtanschlag ausgebildet ist/sind. An den Ausrichtanschlag werden die Vorderkanten und/oder die Hinterkanten der Güter herangeführt, wodurch eine Güterausrichtung bewirkt wird.

Um einen ruhigen und hochpräzisen Lauf und damit eine optimale Güterausrichtung zu bewirken, ist die Umlaufeinrichtung oder sind die Umlaufeinrichtungen jeweils mit stets konstanter Gütertransportgeschwindigkeit umlaufend ausgebildet. Insbesondere weist die erste Umlaufeinrichtung eine stets konstante erste Gütertransportgeschwindigkeit v1 auf. Die zweite Umlaufeinrichtung weist bevorzugt eine stets konstante zweite Gütertransportgeschwindigkeit v2 auf.

Insbesondere ist vorgesehen, dass die Gütertransportgeschwindigkeiten der Umlaufeinrichtungen zueinander unterschiedlich groß sind. Es kann vorgesehen sein, dass die Gütertransportgeschwindigkeit v1 größer als die Gütertransportgeschwindigkeit v2 ist. Ist dies der Fall, so wird ein tafelförmiges Gut mit einer größeren Geschwindigkeit der nachfolgenden Umlaufeinrichtung zugeführt, sodass die Vorderkanten der Güter jeweils gegen mindestens einen Ausrichtanschlag treten können.

Ist die Gütertransportgeschwindigkeit v1 kleiner als die Gütertransportgeschwindigkeit v2, so erfolgt quasi ein Überholen einer Umlaufeinrichtung der vorausgegangenen Umlaufeinrichtung mit der Folge, dass mindestens ein entsprechender Ausrichtanschlag jeweils an die jeweilige Hinterkante der Güter zur Ausrichtung treten kann.

Eine Weiterbildung der Erfindung sieht vor, dass der ersten Umlaufeinrichtung eine Güterzuführeinrichtung vorgeschaltet ist, die die Güter mit einer Zuführgeschwindigkeit vz anliefert, die vorzugsweise kleiner als oder vorzugsweise größer als die Gütertransportgeschwindigkeit v1 ist. Die Güterzuführeinrichtung dient demzufolge der Zuführung der Güter zur ersten Umlaufeinrichtung, wobei die Zuführgeschwindigkeit derart gewählt ist, dass entweder - wie vorstehend bereits erläutert - eine Ausrichtung an den Vorderkanten oder an den Hinterkanten der Güter vorgenommen werden kann.

Die Güterzuführeinrichtung ist als mindestens ein Güterzuführtrum, insbesondere mindestens ein Güterzuführriementrum, ausgebildet.

Eine Weiterbildung der Erfindung sieht vor, dass mindestens eine der Umlaufeinrichtungen - über ihren Umfang gesehen - nur einen einzigen Ausrichtanschlag aufweist. Insbesondere weist die zweite Umlaufeinrichtung - über ihren Umfang gesehen - nur einen einzigen Ausrichtanschlag auf. Dies hat zur Folge, dass immer ein voller Umlauf der jeweiligen Umlaufeinrichtung erfolgen muss, um den einzigen Ausrichtanschlag in Funktion mit dem jeweiligen tafelförmigen Gut zu bringen, sodass möglicherweise auftretende Unregelmäßigkeiten bei jedem Umlauf periodisch auftreten und demzufolge jede Tafel mit dieser Unregelmäßigkeit belastet wird, sodass insgesamt reproduzierbare Verhältnisse vorliegen.

Grundsätzlich ist vorgesehen, dass die in der Transportkette liegende letzte Umlaufeinrichtung die präzise ausgerichteten Güter der Lackier- und/oder Druckmaschine zuführt, ohne dass eine separate Übergabeeinrichtung dazwischengeschaltet ist. Alternativ kann jedoch der letzten Umlaufeinrichtung eine Güterübernahmeeinrichtung mit Haltevorrichtung für ein positionswahrendes Halten und für ein Weitertransportieren des fein ausgerichteten Gutes zugeordnet sein.

Nach einer Weiterbildung der Erfindung ist vorgesehen, dass die zweite Umlaufeinrichtung eine Güterübernahmeeinrichtung mit Haltevorrichtung für ein positionswahrendes Halten und Weitertransportieren eines fein ausgerichteten Gutes ist. In diesem Falle übernimmt also die insbesondere zweite Umlaufeinrichtung zusätzlich die Funktion der hochgenauen Übergabe der tafelförmigen Güter an die Lackier- und/oder Druckmaschine. Sofern mehr als zwei Umlaufeinrichtungen vorgesehen sind, kann demzufolge die letzte Umlaufeinrichtung gleichzeitig auch die Übergabeeinrichtung bilden. Sind beispielsweise drei Umlaufeinrichtungen vorgesehen, denen noch eine vierte Umlaufeinrichtung nachgeschaltet ist, so kann letztere auch die Funktion der Übergabeeinrichtung übernehmen. Die Übergabeeinrichtung weist bevorzugt stets eine konstante Gütertransportgeschwindigkeit auf. Im Falle der vierten Umlaufeinrichtung ist demzufolge eine konstante vierte Gütertransportgeschwindigkeit v4 vorgesehen. Die insbesondere vierte Gütertransportgeschwindigkeit v4 ist ebenso groß wie die auf das jeweilige Gut ebenfalls wirkende, insbesondere zweite Gütertransportgeschwindigkeit v2. Da beide Geschwindigkeiten gleich groß sind, erfolgt eine nicht spürbare, ruckfreie Güterübergabe.

Die Erfindung betrifft ferner ein Verfahren zum positionsgenauen Zuführen von tafelförmigen Gütern, insbesondere Blechtafeln, an Lackier- und/oder Druckmaschinen, insbesondere zum Betreiben einer Vorrichtung, so wie sie vorstehend erläutert wurde, mit mindestens einer Kantenausrichtung der Güter, wobei jeweils eine liegend auf einer eine stets konstante, insbesondere erste Geschwindigkeit v1 aufweisenden, ebenen Unterlage und an diese zumindest zeitweise festgehaltenes Gut mit mindestens einer seiner Kanten in mindestens einer eine Ausrichtung bewirkende Anlage an mindestens einen Ausrichtanschlag gebracht wird, der sich mit einer stets konstanten, anderen, insbesondere zweiten Geschwindigkeit v2 bewegt.

Der vorstehend beschriebene Ausrichtvorgang kann mehrmals nacheinander im Zuge des Gütertransportwegs durchgeführt werden.

Bevorzugt ist die erste Geschwindigkeit v1 größer oder kleiner als die Geschwindigkeit v2.

Das Vorgehen kann derart getroffen sein, dass während des Heranbewegens der Kante des Gutes an den Ausrichtanschlag das Gut eine Wegstrecke durchläuft, die größer als 10 %, insbesondere größer als 33 %, der sich in Transportrichtung erstreckenden Länge des tafelförmigen Gutes ist.

Bevorzugt bewegt sich während der Ausrichtung und der Anlage der Kante des Gutes an dem Ausrichtanschlag letzterer entlang einer ebenen Bahn. Die erwähnte ebene Unterlage bildet bevorzugt einen Bereich einer geschlossenen ersten Umlaufbahn. Die erwähnte ebene Bahn bildet bevorzugt einen Bereich einer geschlossenen zweiten Umlaufbahn.

Schließlich ist bevorzugt vorgesehen, dass ein mit mindestens einer seiner Kanten an dem Ausrichtanschlag anliegendes und dadurch ausgerichtetes, insbesondere fein ausgerichtetes Gut an seiner Ober- und/oder Unterseite mittels einer Übergabeeinrichtung positionswahrend festgehalten und unter Verlassen des Ausrichtanschlags von dieser weitertransportiert wird. Das Gut wird demzufolge positionsgenau der Lackier- und/oder Druckmaschine zugeführt.

Die Zeichnungen veranschaulichen die Erfindung anhand von Ausführungsbeispielen, und zwar zeigt:
- Figur 1: eine schematische perspektivische Ansicht einer Vorrichtung zum positionsgenauen Zuführen von tafelförmigen Gütern zu einer Lackier- und/oder Druckmaschine,
- Figur 2: eine perspektivische Ansicht einer mit Schlitten versehenen Rundbogenführung der Vorrichtung der Figur 1,
- Figur 3: eine Seitenansicht der Rundbogenführung der Figur 2,
- Figur 4: eine Stirnansicht der Rundbogenführung der Figur 2,
- Figur 5: eine Draufsicht auf die Rundbogenführung der Figur 2,
- Figur 6: ein weiteres Ausführungsbeispiel einer Vorrichtung zum positionsgenauen Zuführen von tafelförmigen Gütern zu einer Lackier- und/oder Druckmaschine und
- Figur 7: ein weiteres Ausführungsbeispiel einer Vorrichtung zum positionsgenauen Zuführen von tafelförmigen Gütern zu einer Lackier- und/oder Druckmaschine.

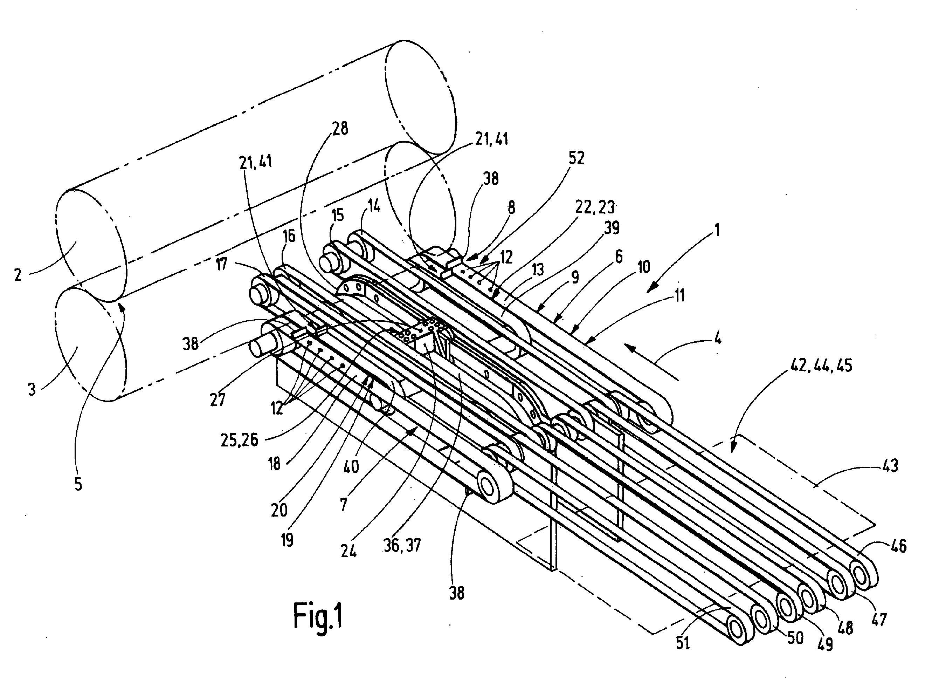

Die Figur 1 zeigt eine Vorrichtung 1 zum positionsgenauen Zuführen von tafelförmigen Gütern, insbesondere Blechtafeln, an einer Lackier- und/oder Druckmaschine, wobei von letzterer mit gestrichelten Linien nur ein Lackier- beziehungsweise Druckzylinder 2 und ein Gegendruckzylinder 3 dargestellt ist. Mittels der Vorrichtung 1 werden tafelförmige Güter, insbesondere Blechtafeln, in liegender Stellung in Transportrichtung 4 einem Lackier- beziehungsweise Druckspalt 5 zugeführt, der zwischen dem Lackier- beziehungsweise Druckzylinder 2 und dem Gegendruckzylinder 3 ausgebildet ist.

Die Vorrichtung 1 weist eine erste Umlaufeinrichtung 6 auf, die eine ebene, erste Transportstrecke 7 hat und die eine erste Ausrichteinrichtung 8 für eine grobe Ausrichtung von auf der Transportstrecke 7 aufliegenden und mittels dieser transportierten Güter besitzt. Die erste Umlaufeinrichtung 6 ist als ein erstes Trum 9 ausgebildet, das ein erstes Riementrum 10, insbesondere erstes Saugriementrum 11 ist. Zum Zwecke der Entfaltung einer Saugwirkung sind Sauglöcher 12 am Saugriementrum 11 vorgesehen, wobei unterhalb des Saugriementrums 11 ein nicht dargestellter Saugkasten angeordnet ist, in dem ein Vakuum erzeugt wird, das durch die Sauglöcher 12 hindurch auf die auf der Vorrichtung 1 liegenden tafelförmigen Güter wirkt. Hierdurch ist eine erste Haltevorrichtung 52 ausgebildet.

Im Einzelnen setzt sich das erste Trum 9 beziehungsweise erste Riementrum 10 beziehungsweise erste Saugriementrum 11 aus mehreren, mit seitlichem Abstand zueinander liegenden Einzeltrums 13, 14, 15, 16, 17 und 18 zusammen, die gemeinsam angetrieben werden, sodass jedes Einzeltrum 13 bis 18 dieselbe Geschwindigkeit aufweist.

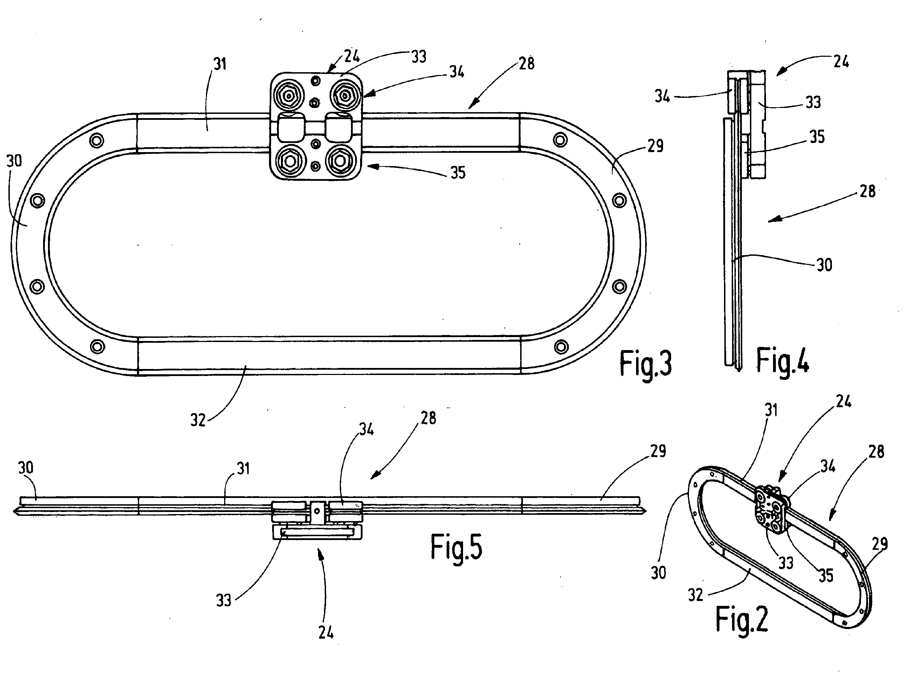

Ferner weist die Vorrichtung 1 eine zweite Umlaufeinrichtung 19 auf, die eine ebene, zweite Transportstrecke 20 und eine zweite Ausrichteinrichtung 21 für eine bereits mittels der ersten Ausrichteinrichtung 8 erfolgten Ausrichtung erfolgende feinere Ausrichtung der Güter besitzt. Die zweite Transportstrecke 20 liegt in derselben Ebene wie die erste Transportstrecke 7. Die zweite Umlaufeinrichtung 19 ist als zweites Trum 22, insbesondere zweites Riementrum 23, ausgebildet. Ferner weist die zweite Umlaufeinrichtung 19 einen Schlitten 24 auf, der eine zweite Haltevorrichtung 25 für die Güter besitzt. Die Haltevorrichtung 25 ist als Unterdruckvorrichtung 26 ausgebildet, das heißt, es ist eine Saugplatte 27 mit einer Vielzahl von Sauglöchern vorgesehen, deren Saugwirkung auf die Unterseite der auf der Vorrichtung 1 aufliegenden Güter wirkt. Der Schlitten 24 ist entlang einer Rundbogenführung 28 geführt. Gemäß der Figuren 2 bis 5 weist die Rundbogenführung 28 zwei 180°-Bogenführungen 29 und 30 mit dazwischen liegenden Geradführungen 31 und 32 auf. Bei den Bogenführungen 29, 30 und Geradführungen 31, 32 handelt es sich um Führungsschienen, die insgesamt eine stadionförmige Führungsbahn für den Schlitten 24 bilden. Der Schlitten 24 weist eine Grundplatte 33 auf, an dem obere und untere Rollenpaare 34, 35 drehbar gelagert sind, zwischen denen die von den Bogenführungen 29, 30 und Geradführungen 31, 32 gebildete stadionförmige Führung aufgenommen ist, sodass sich der Schlitten 24 entlang der stadionförmigen Bahn hochgenau und exakt geführt bewegen kann. In den Figuren 2 bis 5 ist die Saugplatte 27 der Einfachheit halber nicht dargestellt. Aus der Figur 1 ist erkennbar, dass der Rundbogenführung 28 ein Antriebstrum 36 zugeordnet ist, das unterhalb des Schlittens 24 als Antriebsaugriementrum 37 ausgebildet ist. Mittels eines unterhalb des Antriebsaugriementrums 37 liegenden Saugkastens lassen sich die Saugöffnungen der Saugplatte 27 mit Unterdruck versorgen.

Die erste Ausrichteinrichtung 8 ist als zwei erste Ausrichtanschläge 38 ausgebildet, die sich an den Einzeltrums 13 und 18 auf gleicher Höhe befinden, wobei zwei weitere erste Ausrichtanschläge 38 an den genannten Einzeltrums 13 und 18 vorgesehen sind und die beiden Anschlagpaare einen Abstand voneinander aufweisen, die der halben Länge der Einzeltrums 13 und 18 entspricht. Das zweite Trum 22 setzt sich aus zwei Einzeltrums 39 und 40 und dem Antriebstrum 36 zusammen, wobei die Einzeltrums 39 und 40 sowie das Antriebstrum 36 mit jeweils seitlichem Abstand zueinander liegen.

Die Anordnung ist ferner derart getroffen, dass die Einzeltrums 13 bis 18 einerseits und die Einzeltrums 39 und 40 sowie das Antriebstrum 36 andererseits derart über die Breite der Vorrichtung verteilt angeordnet sind, sodass auf der Vorrichtung 1 zu transportierende Güter über ihre Breite verteilt unterstützt werden. Insbesondere ist vorgesehen, dass das Einzeltrum 39 zwischen den Einzeltrums 13 und 14 liegt, dass das Antriebstrum 36 zwischen den Einzeltrums 15 und 16 liegt, sodass auch die Rundbogenführung 28 zwischen den Einzeltrums 15 und 16 liegt und dass sich das Einzeltrum 40 zwischen den Einzeltrums 17 und 18 befindet.

Die zweite Umlaufeinrichtung 19 weist an ihren Einzeltrums 39 und 40 jeweils einen die zweite Ausrichteinrichtung 21 bildenden zweiten Ausrichtanschlag 41 auf, wobei jedes Einzeltrum 39 und 40 nur diesen einzigen Ausrichtanschlag 41 besitzt.

Mittels einer nicht näher dargestellten Antriebseinrichtung werden die Einzeltrums 13 bis 18 mittels gleicher, konstanter Geschwindigkeit angetrieben, sodass eine stets konstante Gütertransportgeschwindigkeit vorliegt. Ferner werden die Einzeltrums 39 und 40 sowie das Antriebstrum 36 und damit der Schlitten 24 jeweils mit einer konstanten Geschwindigkeit von der Antriebseinrichtung angetrieben, sodass auch dort stets eine konstante Gütertransportgeschwindigkeit vorliegt, wobei die erste Umlaufeinrichtung 6 gegenüber der zweiten Umlaufeinrichtung 19 eine unterschiedliche Geschwindigkeit aufweist. Die Anordnung ist derart getroffen, dass die erste Umlaufeinrichtung 6 eine stets konstante erste Gütertransportgeschwindigkeit v1 aufweist und dass die zweite Umlaufeinrichtung 19 eine stets konstante zweite Gütertransportgeschwindigkeit v2 besitzt. Die Gütertransportgeschwindigkeit v1 ist größer als die Gütertransportgeschwindigkeit v2.

Der Figur 1 ist zu entnehmen, dass der ersten Umlaufeinrichtung 6 eine Güterzuführeinrichtung 42 vorgeschaltet ist, mit der die Güter 43 (exemplarisch ist eine Blechtafel gestrichelt dargestellt) mit einer Zuführgeschwindigkeit vz angeliefert werden, wobei die Zuführgeschwindigkeit vz größer als die Gütertransportgeschwindigkeit v1 ist. Die Güterzuführeinrichtung 42 ist als Güterzuführtrum 44, insbesondere Güterzuführriementrum 45 ausgebildet und wird von mehreren, mit seitlichem Abstand zueinander liegenden Einzeltrums 46 bis 51 gebildet, die über die Breite von zu transportierenden tafelförmigen Gütern verteilt angeordnet sind. Die Anordnung ist so getroffen, dass das Einzeltrum 46 zwischen den Einzeltrums 13 und 14 liegt, dass das Einzeltrum 47 zwischen den Einzeltrums 14 und 15 liegt, dass das Einzeltrum 48 zwischen den Einzeltrums 15 und der Rundbogenführung 28 liegt, dass das Einzeltrum 49 zwischen der Rundbogenführung 28 und dem Einzeltrum 16 liegt, dass das Einzeltrum 50 zwischen den Einzeltrums 16 und 17 liegt und dass das Einzeltrum 51 zwischen dem Einzeltrum 17 und 18 angeordnet ist.

Es ergibt sich folgende Funktion: Eine beispielsweise von einem Stapel kommende, ein tafelförmiges Gut bildende Blechtafel wird mittels der Güterzuführeinrichtung 42 mit einer konstanten Zuführgeschwindigkeit vz zugeführt und gelangt im Zuge ihrer entlang der Transportrichtung 4 erfolgenden Bewegung mit dem Vorderkantenbereich auf die erste Umlaufeinrichtung 6, die die Gütertransportgeschwindigkeit v1 aufweist, welche kleiner als die Zuführgeschwindigkeit vz ist. Dies führt dazu, dass sich die Vorderkante des Guts 43 gegen die beiden ersten Ausrichtanschläge 38 anlegt, wobei dieses Anlegen im vorderen Bereich der ersten Umlaufeinrichtung 6 erfolgt. Die Anordnung ist derart getroffen, dass nach dem Anlegen der Vorderkante des Guts 43 an die ersten Ausrichtanschläge 38 das erste Saugriementrum 11 aktiv wird, das heißt, mittels der ersten Haltevorrichtung 52, insbesondere Sauglöcher 12, wird das Gut 43 relativ zu den Einzeltrums 13 und 18 an diesen festgehalten. Damit ist das Gut 43 einer Grobausrichtung unterzogen worden und wird in dieser grob ausgerichteten Stellung mit der Gütertransportgeschwindigkeit v1 weiter in Transportrichtung 4 bewegt. Die Folge ist, dass die Vorderkante des Guts 43 nunmehr gegen die zweiten Ausrichtanschläge 41 der zweiten Umlaufeinrichtung 19 tritt, da die zweite Umlaufeinrichtung 19 eine Gütertransportgeschwindigkeit v2 aufweist, die kleiner als die Gütertransportgeschwindigkeit v1 ist. Dieser weitere, feinere Ausrichtvorgang wird - ebenso wie der zuvor beschriebene Grobausrichtungsvorgang - entlang der Ebene der zweiten Transportstrecke 20 (beziehungsweise der ersten Transportstrecke 7) durchgeführt und erfolgt vorzugsweise über eine relativ große Wegstrecke derart, dass ein hochpräzises, mit vorzugsweise möglichst geringer Relativgeschwindigkeit erfolgendes Anlegen der Vorderkante an die zweite Ausrichteinrichtung 21 erfolgt. Hierdurch wird das Gut feinausgerichtet, wobei es bei diesem Vorgang stets von den Sauglöchern 12 gehalten wird, bei Anlage der Vorderkante an der zweiten Ausrichteinrichtung 21 jedoch eine Relativbewegung des Guts 43 zur ersten Umlaufeinrichtung 6 möglich ist. Ist die Feinausrichtung durchgeführt, so tritt die Saugwirkung der zweiten Haltevorrichtung 25, nämlich der Saugplatte 27, in Aktion, wobei diese Saugwirkung vorzugsweise stärker ist, als die Haltewirkung der ersten Haltevorrichtung 52 an der ersten Umlaufeinrichtung 6. Nunmehr kann die Saugwirkung der ersten Umlaufeinrichtung 6 vorzugsweise deaktiviert werden. Der sich entlang der Ebene der zweiten Transportstrecke 20 bewegende Schlitten führt nun das feinausgerichtete Gut 43 zusammen mit den zugehörigen Einzeltrums 39 und 40 dem Lackier- oder Druckspalt 5 hochpräzise zu, sodass dort eine Weiterverarbeitung des Guts 43 erfolgen kann. Weitere, nachfolgende Güter werden in entsprechender Weise behandelt.

Insbesondere kann vorgesehen sein, dass das Heranbewegen der Vorderkante des Guts 43 an den jeweiligen Ausrichtanschlag 38 und/oder 41 über eine Wegstrecke erfolgt, die größer als 10 %, insbesondere größer als 33 %, der sich in Transportrichtung 4 erstreckenden Länge des tafelförmigen Guts 43 ist. Durch die mittels des Schlittens 24 erfolgende Führung des jeweiligen Guts 43 unter Berücksichtigung der hochpräzisen Rundbogenführung 28 werden höchstgenaue, reproduzierbare Zuführergebnisse erzielt. Von besonderer Bedeutung ist dabei auch, dass sämtliche Geschwindigkeit der einzelnen Baugruppen der Vorrichtung 1 jeweils konstant sind.

Von weiterer Bedeutung ist es vorzugsweise, wenn - wie aus der Figur 1 ersichtlich - die Haltewirkung (Sauglöcher 12) der ersten Umlaufeinrichtung 6 in unmittelbarer Nähe der zweiten Ausrichteinrichtung 21 liegen, wodurch eine hohe Ausrichtgenauigkeit erzielt wird. Die erwähnten Baugruppen liegen insbesondere eng seitlich benachbart zueinander. Die Güter werden ferner flach gehalten und daher stets definiert an den Ausrichtanschlag 41 angelegt. Eine Höhendifferenz muss daher nicht überwunden werden.

Es ist verständlich, dass anstelle des Haltens der Güter 43 mittels Unterdruck auch oder zusätzlich ein magnetisch erfolgendes Halten durchgeführt werden kann, sofern die Güter ferromagnetisches Material aufweisen.

Alternativ - und in den Figuren nicht dargestellt - kann eine Güterübernahmeeinrichtung mit Haltevorrichtung für ein positionswahrendes Halten und Weitertransportieren eines feinausgerichteten Gutes eingesetzt werden, die zwischen dem Ende der zweiten Umlaufeinrichtung 19 und der Lackier- und/oder Druckmaschine angeordnet ist und das feinausgerichtete Gut von der zweiten Umlaufeinrichtung 19 übernimmt und dann in dieser feinausgerichteten Stellung der Weiterverarbeitungsmaschine zuführt.

Ferner ist es möglich, dass die Güter in entsprechender Weise - wie vorstehend beschrieben - nicht an ihren Vorderkanten, sondern an ihren Rückkanten (Hinterkanten) oder teilweise an den Vorderkanten und teilweise an den Rückkanten ausgerichtet werden, wobei dann die entsprechenden Ausrichteinrichtungen 8 und 21 entsprechende Positionen aufweisen müssen. Die einzelnen Geschwindigkeiten vz, v1 und v2 sind dann derart gestaltet, dass vz kleiner als v1 und v1 kleiner als v2 ist.

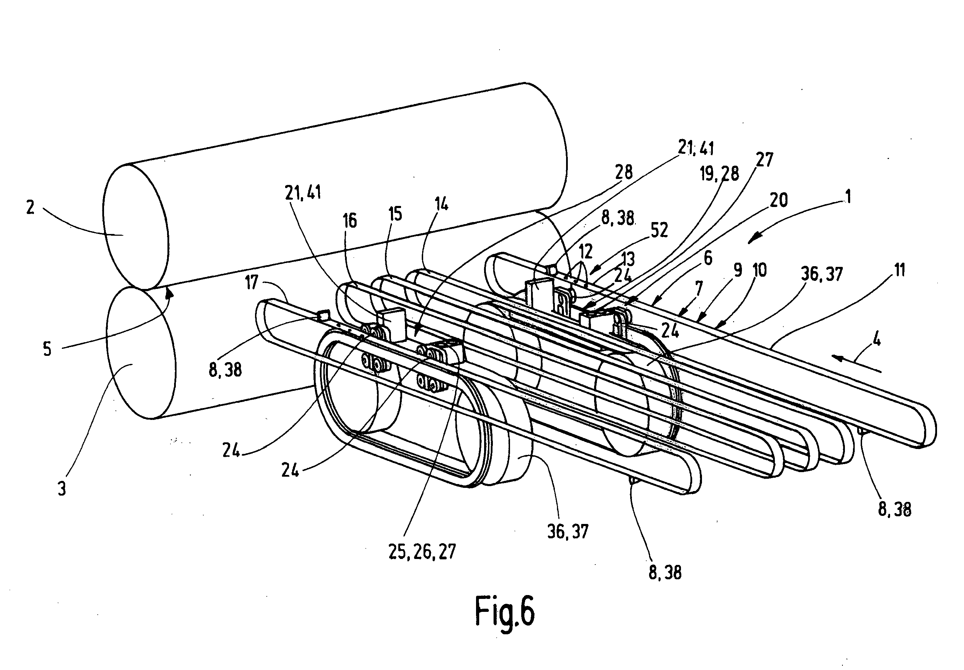

Die Figur 6 zeigt ein weiteres Ausführungsbeispiel einer Vorrichtung 1, die sich von der Vorrichtung 1 der Figur 1 nur dadurch unterscheidet, dass nicht nur eine Rundbogenführung 28, sondern dass zwei Rundbogenführungen 28 vorgesehen sind. Die Güterzuführeinrichtung 42 ist - der Einfachheit halber - in der Figur 6 nicht dargestellt, jedoch selbstverständlich vorhanden. Die erste Umlaufeinrichtung 6 weist Einzeltrums 13, 14, 15, 16 und 17 auf und die zweite Umlaufeinrichtung 19 wird von zwei Rundbogenführungen 28 gebildet, wobei die eine Rundbogenführung 28 zwischen dem Einzeltrum 13 und 14 und die andere Rundbogenführung 28 zwischen dem Einzeltrum 16 und 17 angeordnet ist. Abweichend zur Figur 1 ist ferner, dass die beiden Rundbogenführungen 28 jeweils zwei Schlitten 24 aufweisen, die mit geringem Abstand hintereinander angeordnet sind, wobei der jeweils vordere Schlitten 24 die zweite Ausrichteinrichtung 21 in Form eines zweiten Ausrichtanschlags 41 aufweist und der jeweils hintere Schlitten 24 mit der Halteeinrichtung, insbesondere mit der Saugplatte 27 versehen ist. Die beiden Schlitten 24 werden jeweils mittels eines zugeordneten Antriebstrum 36 bewegt, wobei jeweils ein Antriebssaugriementrum 37 vorliegt, um die jeweilige Saugplatte 27 mit Unterdruck zu versorgen. Im Übrigen gelten die Ausführungen zu Figur 1 entsprechend beim Ausführungsbeispiel der Figur 6.

Alternativ zum Ausführungsbeispiel der Figur 6 ist es auch möglich, dass je Rundbogenführung 28 nur ein Schlitten 24 vorgesehen ist, der sowohl eine Ausrichteinrichtung als auch eine Halteeinrichtung aufweist.

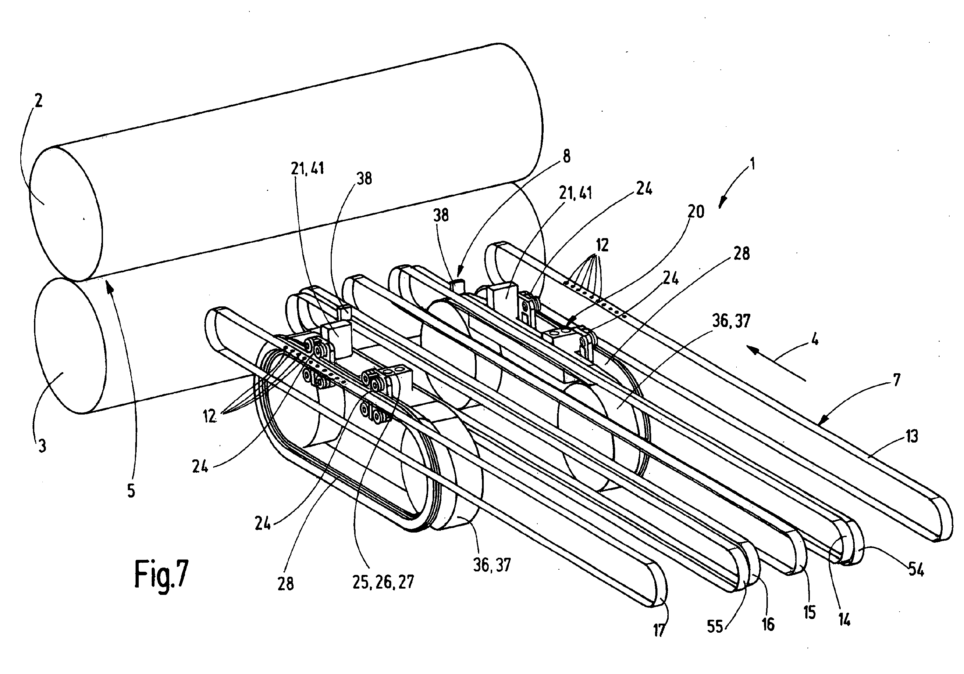

Die Figur 7 zeigt ein weiteres Ausführungsbeispiel einer Vorrichtung 1 zum positionsgenauen Zuführen von tafelförmigen Gütern zu einer Lackier- und/oder Druckmaschine, die sich von der Vorrichtung 1 der Figur 1 ebenfalls dadurch unterscheidet, dass nicht nur eine Rundbogenführung 28, sondern dass zwei Rundbogenführungen 28 vorgesehen sind. Insofern wird im Wesentlichen Bezug genommen auf die Beschreibung zur Figur 1. Ferner unterscheidet sich die Vorrichtung der Figur 7 nur geringfügig gegenüber der Vorrichtung der Figur 6, sodass im Wesentlichen auch auf die Figur 6 und auf deren Beschreibung Bezug genommen wird. Auch beim Ausführungsbeispiel der Figur 7 ist - ebenso wie beim Ausführungsbeispiel der Figur 6 - die Güterzuführeinrichtung 42 der Einfachheit halber nicht dargestellt. Sie kann jedoch vorhanden sein.

Die Figur 7 zeigt eine erste Transportstrecke 7, die eben und umlaufend ausgebildet ist, und von Einzeltrums 13, 14, 15, 16 und 17 gebildet wird. Die Einzeltrums 13 und 17 sind als Saugtrums, insbesondere Saugriementrums ausgebildet und weisen Sauglöcher 12 auf. Der ersten Transportstrecke 7 ist eine erste Ausrichteinrichtung 8 zugeordnet, die erste Ausrichtanschläge 38 jeweils auf den Einzeltrums 54 und 55 aufweisen. Die Einzeltrums 54 und 55 können im Bezug auf die Einzeltrums 13, 14, 15, 16 und 17 etwas tieferliegend angeordnet sein, wobei die Ausrichtanschläge 38 jedoch die genannten Einzeltrums 13 bis 17 nach oben hin überragen.

Ferner weist die Vorrichtung 1 der Figur 7 eine zweite Transportstrecke 20 auf, die von den beiden Rundbogenführungen 28 gebildet werden, wobei sich die eine Rundbogenführung 28 zwischen dem Einzeltrum 13 und dem Einzeltrum 54 und die andere Rundbogenführung 28 zwischen den Einzeltrum 17 und dem Einzeltrum 55 befindet. Jede Rundbogenführung 28 weist zwei in Transportrichtung 4 beabstandet zueinander liegende Schlitten 24 auf, wobei der jeweils hintere Schlitten eine Haltevorrichtung 25 aufweist, die als Unterdruckvorrichtung 26 an einer Saugplatte 27 ausgebildet ist, und wobei jeweils der vordere Schlitten eine Ausrichteinrichtung 21 in Form eines Ausrichtanschlags 41 besitzt.

Es ergibt sich folgende Funktion: Werden Güter 43, insbesondere Blechtafeln, flach aufliegend von der Transportstrecke 7 in Transportrichtung 4 angeliefert, so tritt die jeweilige Tafel mit der Vorderkante gegen die Ausrichteinrichtung 8, das heißt gegen die beiden Ausrichtanschläge 38. Die Anordnung ist derart getroffen, dass die Einzeltrums 13 bis 17 eine höhere Geschwindigkeit aufweisen als die Einzeltrums 54 und 55, sodass es zu der erwähnten Anlage der Vorderkante an der Ausrichteinrichtung 8 kommt. Dabei wird die jeweilige Tafel durch an den Sauglöchern 12 der Trums 13 und 17 anliegendem Unterdruck gehalten, wobei der Unterdruck jedoch nicht so stark ist, dass keine Relativbewegung der Tafel zu den Einzeltrums 13 bis 17 möglich ist, sondern dass bei Anlage der Vorderkante an der Ausrichteinrichtung 8 zwar von den Sauglöchern 12 eine Haltewirkung nach unten erzeugt wird, dabei jedoch eine Relativbewegung in Transportrichtung 4 erfolgen kann. Auf diese Art und Weise ist eine Grobausrichtung der jeweiligen Tafel gewährleistet. Diese grob ausgerichtete Tafel gelangt anschließend mit ihrer Vorderkante gegen die zweite Ausrichteinrichtung 21, die als Ausrichtanschläge 41 ausgebildet ist und sich jeweils an dem vorderen Schlitten der beiden Rundbogenführungen 28 befindet. Dies passiert deshalb, weil die Geschwindigkeit der Einzeltrums 54 und 55 größer ist, als die Geschwindigkeit der Schlitten 24 der Rundbogenführungen 28. Mittels der als Unterdruckvorrichtung 26 ausgebildeten Haltevorrichtung 25 an den beiden hinteren Schlitten 24 der beiden Rundbogenführungen 28 wird die jeweilige, nunmehr durch die Ausrichtanschläge 41 fein ausgerichtete Tafel gehalten und kann anschließend dem Lackier- und/oder Druckspalt der nachfolgenden Lackier- und/oder Druckmaschine positionsgenau zugeführt werden.

Das Ausführungsbeispiel der Figur 7 zeigt deutlich, dass eine Trennung zwischen der Transportstrecke und der zugehörigen Ausrichteinrichtung erfolgen kann. Es ist daher nicht erforderlich, dass die Transportstrecke selber die Ausrichteinrichtung trägt, sondern diese kann als separates Bauaggregat vorgesehen sein, wirkt jedoch mit der zugehörigen Transportstrecke entsprechend zusammen.

Bei allen Ausführungsbeispielen können zusätzlich Seitenausrichtanschläge für die Güter vorgesehen sein, sodass die Vorrichtung 1 auch eine Seitenausrichtung der Güter vornimmt.

Grundsätzlich ist vorgesehen, dass die Transportstrecken der einzelnen Ausführungsbeispiele der Erfindung eine konstante Geschwindigkeit aufweisen, wobei entsprechende Geschwindigkeitsdifferenzen der einzelnen Transportstrecken vorgesehen sind, um ein Anschlagen der Tafeln an die jeweiligen Anschläge zu bewirken. Alternativ kann jedoch auch vorgesehen sein, dass eine leicht schwingende Geschwindigkeitsänderung erfolgt, wobei sich die Geschwindigkeiten der einzelnen Einrichtungen der jeweiligen Vorrichtung gleichsinnig und in gleicher Art und Weise ändern. Insbesondere können leicht sinusförmige Geschwindigkeitsänderungen vorgesehen sein. Die Geschwindigkeitsänderungen sind insbesondere rhythmisch ausgebildet. Die erste und zweite und gegebenenfalls die weiteren Transportstrecken machen diese Geschwindigkeitsänderungen synchron, sodass die Übergabe und Ausrichtung trotzdem einwandfrei funktionieren. Derartige, insbesondere rhythmisch erfolgende, Geschwindigkeitsänderungen führen zu Abläufen, bei denen die Übergaben bei geringerer Geschwindigkeit durchgeführt wird, was zur Erhöhung der Präzision führt. Die Antriebe der Transporteinrichtungen und Ausrichteinrichtungen sind insbesondere mit elektronischen Antriebsregelungen versehen, die eine derartige Betriebsführung einfach ermöglichen.

Ferner sei zu der Ausführung der Figur 6 erwähnt, dass diese besonders vorteilhaft ist, weil die Feinausrichtanschläge 21 und die Halteeinrichtung 25 auf der gleichen Rundbogenführung 28 sitzen, das heißt diese Rundumlaufführung kann einfach, robust und präzise wegen der Schlittenführung ausgebildet sein. Ferner liegt eine kostengünstige Lösung vor. Die beiden Rundbogenführungen 28 der Figur 6 werden bevorzugt von der gleichen Riemenumlaufeinrichtung gezogen. Die Ausrichtpräzision und Weitertransportpräzision ist "aus einem Guss" und daher sehr präzise.

In den Ausführungsbeispielen der Figuren ist nicht dargestellt, dass jeweils eine zusätzliche mechanische Einstellbarkeit der beiden Anschläge zueinander vorgesehen sein kann, wodurch eine auf Dauer exakte Winkellage der Güter, insbesondere Tafeln, zur Laufrichtung erreicht wird. Dies gilt insbesondere für die Ausführungsbeispiele der Figuren 6 und 7.

Besonders bevorzugt ist es, wenn die jeweilige Rundbogenführung der einzelnen Ausführungsbeispiele der Figuren nicht nur zwei, sondern jeweils vier Schlitten 24 aufweist, das heißt, jeweils zwei wie dargestellt und zwei im rücklaufenden Bereich (nicht dargestellt). Mit den vier Schlitten können die Rundbogenführungen entsprechend lang mit entsprechend lang geraden Strecken ausgebildet sein. Ferner können die Radien entsprechend groß ausgelegt werden, sodass die Fliehkräfte und der Verschleiß klein bleiben.

Als Alternative kann beim Ausführungsbeispiel der Figur 1 vorgesehen sein, dass sich die Sauglöcher 12 nicht in den Einzeltrums 13 und 18, sondern statt dessen in den Riemen 14 und 17 befinden, wobei ferner die Zuführriemen 46 bis 51 und die Riemen 14 bis 17 über eine Verbindungswelle starr gekoppelt sind, sodass sie mit gleicher (höherer) Geschwindigkeit laufen und so (insbesondere bei eingeschaltetem Vakuum) die Anlegefunktion der Blechtafeln an den entsprechend langsamer laufenden Anschlägen 38 und den entsprechend langsamer laufenden Anschlägen 41 zur Grob- und Feinausrichtung bewirken.

Vorzugsweise ist vorgesehen, dass der Schlitten (24) mit mindestens einem Trum (22,36), insbesondere mit dem zweiten Trum (22) gekuppelt ist.

Vorzugsweise ist vorgesehen, dass mindestens ein Trum (36) ein Saugriementrum (37) ist, mit dem unter Zwischenschaltung mindestens eines Schlittens (24) die Güter (43) mittels mindestens einer Haltevorrichtung (25) saugend gehalten werden.

Vorzugsweise ist vorgesehen, dass das zweite Trum (22) mindestens ein Saugriemen ist, mit dem unter Zwischenschaltung des Schlittens (24) die Güter (43) mittels der Haltevorrichtung (25) saugend gehalten werden.

Vorzugsweise ist vorgesehen, dass die erste und/oder die zweite Ausrichteinrichtung (8,21) und/oder mindestens eine der Ausrichteinrichtungen (8,21) als mindestens ein Ausrichtanschlag (38,41) ausgebildet ist/sind.

Vorzugsweise ist vorgesehen, dass die Umlaufeinrichtung (6,19) oder die Umlaufeinrichtungen (6,19) jeweils eine stets konstante Gütertransportgeschwindigkeit aufweisen.

Vorzugsweise ist vorgesehen, dass die erste Umlaufeinrichtung (6) eine stets konstante erste Gütertransportgeschwindigkeit v1 aufweist.

Vorzugsweise ist vorgesehen, dass die zweite Umlaufeinrichtung (19) eine stets konstante zweite Gütertransportgeschwindigkeit v2 aufweist.

Vorzugsweise ist vorgesehen, dass die Gütertransportgeschwindigkeiten der Umlaufeinrichtungen (6,19) zueinander unterschiedlich groß sind.

Vorzugsweise ist vorgesehen, dass die Gütertransportgeschwindigkeit v1 größer als die Gütertransportgeschwindigkeit v2 ist.

Vorzugsweise ist vorgesehen, dass die Gütertransportgeschwindigkeit v1 kleiner als die Gütertransportgeschwindigkeit v2 ist.

Vorzugsweise ist vorgesehen, dass der ersten Umlaufeinrichtung (6) eine Güterzuführeinrichtung (42) vorgeschaltet ist, die die Güter (43) mit einer Zuführgeschwindigkeit vz anliefert, die vorzugsweise kleiner als oder vorzugsweise größer als die Gütertransportgeschwindigkeit v1 ist.

Vorzugsweise ist vorgesehen, dass die Güterzuführeinrichtung (42) mindestens ein Güterzuführtrum (44), insbesondere mindestens ein Güterzuführriementrum (45), ist.

Vorzugsweise ist vorgesehen, dass mindestens eine der Umlaufeinrichtungen (6,19) -über ihren Umfang gesehen- nur einen einzigen Ausrichtanschlag (41) aufweist.

Vorzugsweise ist vorgesehen, dass die zweite Umlaufeinrichtung (19) -über ihren Umfang gesehen- nur einen einzigen Ausrichtanschlag (41) aufweist.

Vorzugsweise ist vorgesehen, dass der letzten Umlaufeinrichtung (19) eine Güterübernahmeeinrichtung mit Haltevorrichtung für ein positionswahrendes Halten und Weitertransportieren eines feinausgerichteten Gutes (43) zugeordnet ist.

Vorzugsweise ist vorgesehen, dass der zweiten Umlaufeinrichtung (19) eine Güterübernahmeeinrichtung mit Haltevorrichtung für ein positionswahrendes Halten und Weitertransportieren eines feinausgerichteten Gutes (43) zugeordnet ist.

Vorzugsweise ist vorgesehen, dass die Übergabeeinrichtung eine weitere, insbesondere vierte Umlaufeinrichtung ist.

Vorzugsweise ist vorgesehen, dass die Übergabeeinrichtung eine stets konstante, insbesondere vierte Gütertransportgeschwindigkeit v4 aufweist.

Vorzugsweise ist vorgesehen, dass die insbesondere vierte Gütertransportgeschwindigkeit v4 ebenso groß wie die auf das jeweilige Gut ebenfalls wirkende, insbesondere zweite Gütertransportgeschwindigkeit v2 ist.

## Patentansprüche

1. Vorrichtung (1) zum positionsgenauen Zuführen von tafelförmigen Gütern (43), insbesondere Blechtafeln, an Lackier- und/oder Druckmaschinen, mit mindestens einer umlaufenden, ebenen, ersten Transportstrecke (7) und mit mindestens einer umlaufenden, ersten Ausrichteinrichtung (8) für eine grobe Ausrichtung der Güter (43), und mit mindestens einer umlaufenden, ebenen, zweiten Transportstrecke (20) sowie mit mindestens einer umlaufenden, zweiten Ausrichteinrichtung (21) für eine nach der bereits erfolgten Ausrichtung erfolgende feinere Ausrichtung der Güter (43), sowie mit mindestens einer die Güter (43) zumindest zeitweise in Bezug auf mindestens eine der Transportstrecken (7,21), insbesondere in Bezug auf die erste Transportstrecke (7), fixierenden, umlaufenden Halteeinrichtung (52,25), **dadurch gekennzeichnet, dass** mindestens eine Umlaufeinrichtung (6,19) mindestens einen Schlitten (24) aufweist, der entlang einer Führung auf einer umlaufenden Bahn geführt ist, und der Schlitten mindestens eine Halteeinrichtung (52,25) und/oder eine Ausrichteinrichtung (8,21) für die Güter (43) aufweist.

2. Vorrichtung nach Anspruch 1, **gekennzeichnet durch** mindestens eine weitere, umlaufende, ebene, insbesondere dritte Transportstrecke und mindestens eine weitere, umlaufende, insbesondere dritte Ausrichteinrichtung für eine nach der bereits erfolgten Ausrichtung erfolgende feinere Ausrichtung der Güter (43).

3. Vorrichtung nach einem der vorhergehenden Ansprüche, **gekennzeichnet durch** mindestens eine weitere, die Güter (43) zumindest zeitweise in Bezug auf mindestens eine der Transportstrecken (7,20), insbesondere in Bezug auf die zweite Transportstrecke (20), fixierende, umlaufende insbesondere zweite Halteeinrichtung (25,52).

4. Vorrichtung nach einem der vorhergehenden Ansprüche, **dadurch gekennzeichnet, dass** die erste Transportstrecke (7) und die erste Ausrichteinrichtung (8) einer ersten Umlaufeinrichtung (6) angehören.

5. Vorrichtung nach einem der vorhergehenden Ansprüche, **dadurch gekennzeichnet, dass** die zweite Transportstrecke (20) und die zweite Ausrichteinrichtung (21) einer zweiten Umlaufeinrichtung (19) angehören.

6. Vorrichtung nach einem der vorhergehenden Ansprüche 2 bis 5, **dadurch gekennzeichnet, dass** die dritte Transportstrecke und die dritte Ausrichteinrichtung einer dritten Umlaufeinrichtung angehören.

7. Vorrichtung nach einem der vorhergehenden Ansprüche, **dadurch gekennzeichnet, dass** mindestens eine der Ausrichteinrichtungen (8,21) eine Vorderkanten- und/oder eine Hinterkantenausrichteinrichtung ist.

8. Vorrichtung nach einem der vorhergehenden Ansprüche, **dadurch gekennzeichnet, dass** die Halteeinrichtung (52,25) oder mindestens eine der Halteeinrichtungen (52,25) eine Unterdruckeinrichtung und/oder Magneteinrichtung, insbesondere Elektromagneteinrichtung, ist.

9. Vorrichtung nach einem der vorhergehenden Ansprüche, **dadurch gekennzeichnet, dass** die Halteeinrichtung (52,25) oder mindestens eine der Halteeinrichtungen (52,25) mindestens einer der Umlaufeinrichtungen (6,19) zugeordnet ist.

10. Vorrichtung nach einem der vorhergehenden Ansprüche, **dadurch gekennzeichnet, dass** die Halteeinrichtung (52) der ersten Umlaufeinrichtung (6) zugeordnet ist.

11. Vorrichtung nach einem der vorhergehenden Ansprüche, **dadurch gekennzeichnet, dass** mindestens eine der Umlaufeinrichtungen (52,25) als mindestens ein Trum (9,22) ausgebildet ist.

12. Vorrichtung nach einem der vorhergehenden Ansprüche, **dadurch gekennzeichnet, dass** die erste Umlaufeinrichtung (6) als mindestens ein erstes Trum (9) ausgebildet ist.

13. Vorrichtung nach einem der vorhergehenden Ansprüche, **dadurch gekennzeichnet, dass** mindestens ein Trum (9,22) als ein Riementrum (10,23) ausgebildet ist.

14. Vorrichtung nach einem der vorhergehenden Ansprüche, **dadurch gekennzeichnet, dass** das erste Trum (9) als erstes Riementrum (10) ausgebildet ist.

15. Vorrichtung nach einem der vorhergehenden Ansprüche, **dadurch gekennzeichnet, dass** mindestens ein Trum (10,36) zur Ausbildung von mindestens einer Halteeinrichtung (52,25) zumindest bereichsweise als Saugriementrum (11,37) ausgebildet ist.

16. Vorrichtung nach einem der vorhergehenden Ansprüche, **dadurch gekennzeichnet, dass** das erste Riementrum (10) zur Ausbildung der Halteeinrichtung (52) zumindest bereichsweise als Saugriementrum (11) ausgebildet ist.

17. Vorrichtung nach einem der vorhergehenden Ansprüche, **dadurch gekennzeichnet, dass** die zweite Umlaufeinrichtung (19) mindestens ein zweites Trum (22) aufweist.

18. Vorrichtung nach einem der vorhergehenden Ansprüche, **dadurch gekennzeichnet, dass** das zweite Trum (22) als zweites Riementrum (23) ausgebildet ist.

19. Vorrichtung nach einem der vorhergehenden Ansprüche, **dadurch gekennzeichnet, dass** die zweite Umlaufeinrichtung (19) mindestens einen Schlitten (24) aufweist.

20. Vorrichtung nach einem der vorhergehenden Ansprüche, **dadurch gekennzeichnet, dass** die Haltevorrichtung (52,25) oder mindestens eine der Haltevorrichtungen (52,25) eine Unterdruckvorrichtung und/oder eine Magnetvorrichtung, insbesondere Elektromagnetvorrichtung, ist.

21. Vorrichtung nach einem der vorhergehenden Ansprüche, **dadurch gekennzeichnet, dass** der Schlitten (24) entlang mindestens einer Rundbogenführung (28) geführt ist.

22. Vorrichtung nach einem der vorhergehenden Ansprüche, **dadurch gekennzeichnet, dass** die Rundbogenführung (28) zwei 180°-Bogenführungen (29,30) mit dazwischen liegenden Geradführungen (30,32) aufweist.

23. Verfahren zum Betreiben einer Vorrichtung nach einem oder mehreren der vorhergehenden Ansprüche, mit mindestens einer Kantenausrichtung der Güter, wobei jeweils ein liegend auf einer eine stets konstante, insbesondere erste Geschwindigkeit v1 aufweisenden, ebenen Unterlage und an dieser zumindest zeitweise festgehaltenes Gut mit mindestens einer seiner Kanten in mindestens eine eine Ausrichtung bewirkende Anlage an mindestens einen Ausrichtanschlag gebracht wird, der sich mit einer stets konstanten, anderen, insbesondere zweiten Geschwindigkeit v2, bewegt.

24. Verfahren nach Anspruch 23, **dadurch gekennzeichnet, dass** der beschriebene Ausrichtvorgang mehrmals nacheinander durchgeführt wird.

25. Verfahren nach einem der vorhergehenden Ansprüche 23 oder 24, **dadurch gekennzeichnet, dass** die Geschwindigkeit v1 größer oder kleiner als die Geschwindigkeit v2 ist.

26. Verfahren nach einem der vorhergehenden Ansprüche 23 bis 25, **dadurch gekennzeichnet, dass** während des Heranbewegens der Kante des Gutes an den Ausrichtanschlag das Gut eine Wegstrecke durchläuft, die größer als 10 %, insbesondere größer als 33 %, der sich in Transportrichtung erstreckenden Länge des tafelförmigen Gutes ist.

27. Verfahren nach einem der vorhergehenden Ansprüche 23 bis 26, **dadurch gekennzeichnet, dass** sich während der Ausrichtung und der Anlage der Kante des Gutes an dem Ausrichtanschlag letzterer entlang einer ebenen Bahn bewegt.

28. Verfahren nach einem der vorhergehenden Ansprüche 23 bis 27, **dadurch gekennzeichnet, dass** die ebene Unterlage einen Bereich einer geschlossenen ersten Umlaufbahn bildet.

29. Verfahren nach einem der vorhergehenden Ansprüche 23 bis 28, **dadurch gekennzeichnet, dass** die ebene Bahn einen Bereich einer geschlossenen zweiten Umlaufbahn bildet.

30. Verfahren nach einem der vorhergehenden Ansprüche 23 bis 29, **dadurch gekennzeichnet, dass** ein mit mindestens einer seiner Kanten an dem Ausrichtanschlag anliegendes und dadurch ausgerichtetes, insbesondere feinausgerichtetes Gut an seiner Ober- und/oder Unterseite mittels einer Übergabeeinrichtung positionswahrend festgehalten und unter Verlassen des Ausrichtanschlags von dieser weitertransportiert wird.

## Claims

1. A device (1) for positionally accurate feeding of tabular goods (43), in particular sheet metal panels, to lacquer- and/or printing machines having at least one first, level circumferential transport path (7) and at least one circumferential, first positioning means (8) for a rough positioning of the goods (43), and having at least one circumferential, level second transport path (20) and having at least one circumferential, second positioning means (21) for more accurate positioning of the goods (43) following previous positioning, and having at least one circumferential retaining means (52, 25) for fixing the goods (43) at least temporarily relative to at least one of the transport paths (7, 20), in particular relative to the first transport path (7), **characterized in that** at least one revolving means (6, 19) comprises at least one carriage (24) guided along a guide on a circumferential rail and the carriage comprises at least one retaining means (52, 25) and/or a positioning means (8, 21) for the goods (43).

2. The device according to claim 1, **characterized by** at least one additional, circumferential, level, in particular third transport path and at least one additional, circumferential, in particular third positioning means for more accurate positioning of the goods (43) following the previous positioning.

3. The device according to any one of the preceding claims, **characterized by** at least one additional, in particular a second, circumferential retaining means (25, 52) that fixes the goods (43) at least temporarily relative to at least one of the transport paths (7, 20), in particular relative to the second transport path (20).

4. The device according to any one of the preceding claims, **characterized in that** the first transport path (7) and the first positioning means (8) are part of a first revolving means (6).

5. The device according to any one of the preceding claims, **characterized in that** the second transport path (20) and the second positioning means (21) are part of a second revolving means (19).

6. The device according to any one of the preceding claims 2 to 5, **characterized in that** the third transport path and the third positioning means are part of a third revolving means.

7. The device according to any one of the preceding claims, **characterized in that** at least one of the positioning means (8, 21) is a leading edge- and/or trailing edge positioning means.

8. The device according to any one of the preceding claims, **characterized in that** the retaining means (52, 25) or at least one of the retaining means (52, 25) is a vacuum retaining means and/or a magnetic means, in particular an electromagnetic means.

9. The device according to any one of the preceding claims, **characterized in that** the retaining means (52, 25) or at least one of the retaining means (52, 25) is associated with at least one of the revolving means (6, 19).

10. The device according to any one of the preceding claims, **characterized in that** the retaining means (52) is associated with the first revolving means (6).

11. The device according to any one of the preceding claims, **characterized in that** at least one of the revolving means (52, 25) is designed as at least a conveyor (9, 22).

12. The device according to any one of the preceding claims, **characterized in that** the first revolving means (6) is designed as at least a first conveyor (9).

13. The device according to any one of the preceding claims, **characterized in that** at least one conveyor (9, 22) is designed as a belt conveyor (10, 23).

14. The device according to any one of the preceding claims, **characterized in that** the first conveyor (9) is designed as a belt conveyor (10).

15. The device according to any one of the preceding claims, **characterized in that** at least one conveyor (10, 36) for forming at least one retaining means (52, 25) is at least sectionally designed as a suction belt conveyor (11, 37).

16. The device according to any one of the preceding claims, **characterized in that** the first belt conveyor (10) for forming the retaining means (52) is at least sectionally designed as a suction belt conveyor (11).

17. The device according to any one of the preceding claims, **characterized in that** the second revolving means (19) comprises at least a second conveyor (22).

18. The device according to any one of the preceding claims, **characterized in that** second conveyor (22) is designed as a second belt conveyor (23).

19. The device according to any one of the preceding claims, **characterized in that** the second revolving means (19) comprises at least one carriage (24).

20. The device according to any one of the preceding claims, **characterized in that** the retaining means (52, 25) or at least one of the retaining means (52, 25) is a vacuum retaining means and/or a magnetic means, in particular an electromagnetic means.

21. The device according to any one of the preceding claims, **characterized in that** the carriage (24) is guided along at least one curved sheet guide (28).

22. The device according to any one of the preceding claims, **characterized in that** the curved sheet guide (28) comprises two 180° -sheet guides (29, 30) with intermediate linear guides (30, 32).

23. A method for operating a device according to any one or more of the preceding claims, the goods having at least one edge alignment, wherein each good lying on a level support having a continually constant in particular first speed v1 and the goods being at least temporarily retained to said support by at least one of its edges is brought, by means of at least one positioning-enabling means, to at least one positioning stoppage that is moving at a different continually constant, in particular second speed v2.

24. The method according to claim 23, **characterized in that** the described positioning procedure is performed several times consecutively.

25. The method according to any one of the preceding claims 23 or 24, **characterized in that** the speed v1 is higher or lower than the speed v2.

26. The method according to any one of the preceding claims 23 to 25, **characterized in that** during the movement of the edge of the good toward the positioning stoppage, the good traverses a traveling distance that is larger than 10%, in particular larger than 33%, of the length of the tabular good extending in transport direction.

27. The method according to any one of the preceding claims 23 to 26, **characterized in that** during the positioning and aligning of the edge of the good to the positioning stoppage, the latter travels along a level path.

28. The method according to any one of the preceding claims 23 to 27, **characterized in that** the level support forms an area of a closed first circumferential path.

29. The method according to any one of the preceding claims 23 to 28, **characterized in that** the level path forms an area of a closed second circumferential path.

30. The method according to any one of the preceding claims 23 to 29, **characterized in that** a good, in particular an accurately positioned good, of which at least one edge is positioned against the positioning stoppage, thereby becoming aligned, is retained in a position-maintaining manner at its top and/or bottom side by a transfer means, and after leaving said positioning stoppage is further transported by said transfer means.

## Revendications

1. Installation (1) pour l'amenée avec précision de positionnement d'articles en forme de plaques (43), en particulier de tôles, à des machines à vernir et/ou à imprimer, avec au moins un premier chemin de transport (7) plan tournant, et avec au moins un premier dispositif d'alignement (8) tournant pour un alignement grossier des articles (43), et avec au moins un deuxième chemin de transport (20) plan tournant, ainsi qu'au moins un deuxième dispositif d'alignement (21) tournant pour un alignement plus précis des articles (43) suite à l'alignement déjà effectué, ainsi qu'avec au moins un dispositif de maintien (52, 25) arrêtant les articles (43) au moins temporairement par rapport à au moins un des chemins de transport (7, 20), en particulier par rapport au premier chemin de transport (7), **caractérisée en ce qu'**au moins un dispositif rotatoire (6, 19) comprend au moins un chariot (24) coulissant le long d'un guidage sur une voie tournante, et **en ce que** le chariot comporte au moins un dispositif de maintien (52, 25) et/ou un dispositif d'alignement (8, 21) pour les articles (43).

2. Installation selon la revendication 1, **caractérisée par** au moins un autre chemin de transport plan tournant, en particulier un troisième chemin de transport, et au moins un autre dispositif d'alignement plan tournant, en particulier un troisième dispositif d'alignement pour un alignement plus précis des articles (43) suite à l'alignement déjà effectué.

3. Installation selon l'une quelconque des revendications précédentes, **caractérisée par** au moins un autre dispositif de maintien, en particulier un deuxième dispositif de maintien (25, 52) tournant arrêtant les articles (43) au moins temporairement par rapport à au moins un des chemins de transport (7, 20), en particulier par rapport au deuxième chemin de transport (20).

4. Installation selon l'une quelconque des revendications précédentes, **caractérisée en ce que** le premier chemin de transport (7) et le premier dispositif d'alignement (8) font partie d'un premier dispositif rotatoire (6).

5. Installation selon l'une quelconque des revendications précédentes, **caractérisée en ce que** le deuxième chemin de transport (20) et le deuxième dispositif d'alignement (21) font partie d'un dispositif rotatoire (19).

6. Installation selon l'une quelconque des revendications 2 à 5, **caractérisée en ce que** le troisième chemin de transport et le troisième dispositif d'alignement font partie d'un troisième dispositif rotatoire.

7. Installation selon l'une quelconque des revendications précédentes, **caractérisée en ce qu'**au moins un des dispositifs d'alignement (8, 21) est un dispositif d'alignement de bord avant et/ou un dispositif d'alignement de bord arrière.

8. Installation selon l'une quelconque des revendications précédentes, **caractérisée en ce que** le dispositif de maintien (52, 25) ou au moins un des dispositifs de maintien (52, 25) est un dispositif à vide et/ou un dispositif magnétique, en particulier un dispositif électromagnétique.

9. Installation selon l'une quelconque des revendications précédentes, **caractérisée en ce que** le dispositif de maintien (52, 25) ou au moins un des dispositifs de maintien (52, 25) est associé à au moins un des dispositifs rotatoires (6, 19).

10. Installation selon l'une quelconque des revendications précédentes, **caractérisée en ce que** le dispositif de maintien (52) est associé au premier dispositif rotatoire (6).

11. Installation selon l'une quelconque des revendications précédentes, **caractérisée en ce qu'**au moins un des dispositifs rotatoires (52, 25) est réalisé sous forme d'au moins un brin (9, 22).

12. Installation selon l'une quelconque des revendications précédentes, **caractérisée en ce que** le premier dispositif rotatoire (6) est réalisé sous la forme d'au moins un premier brin (9).

13. Installation selon l'une quelconque des revendications précédentes, **caractérisée en ce qu'**au moins un brin (9, 22) est réalisé sous la forme d'un brin de bande (10,23).

14. Installation selon l'une quelconque des revendications précédentes, **caractérisée en ce que** le premier brin (9) est réalisé sous la forme d'un premier brin de bande (10).

15. Installation selon l'une quelconque des revendications précédentes, **caractérisée en ce qu'**au moins un brin (10, 36) est réalisé au moins en partie sous la forme d'un brin de bande d'aspiration (11, 37) pour la formation d'au moins un dispositif de maintien (52, 25).

16. Installation selon l'une quelconque des revendications précédentes, **caractérisée en ce que** le premier brin de bande (10) est réalisé au moins en partie sous la forme d'un brin de bande d'aspiration (11) pour la formation du dispositif de maintien (52).

17. Installation selon l'une quelconque des revendications précédentes, **caractérisée en ce que** le deuxième dispositif rotatoire (19) comprend au moins un deuxième brin (22).

18. Installation selon l'une quelconque des revendications précédentes, **caractérisée en ce que** le deuxième brin (22) est réalisé sous la forme d'un deuxième brin de bande (23).

19. Installation selon l'une quelconque des revendications précédentes, **caractérisée en ce que** le deuxième dispositif rotatoire (19) comprend au moins un chariot (24).

20. Installation selon l'une quelconque des revendications précédentes, **caractérisée en ce que** le dispositif de maintien (52, 25) ou au moins un des dispositifs de maintien (52, 25) est un dispositif à vide et/ou un dispositif magnétique, en particulier un dispositif électromagnétique.

21. Installation selon l'une quelconque des revendications précédentes, **caractérisée en ce que** le chariot (24) est guidé le long d'au moins une glissière à arcs en plein cintre (28).

22. Installation selon l'une quelconque des revendications précédentes, **caractérisée en ce que** la glissière à arcs en plein cintre (28) comprend deux glissières cintrées à 180° (29, 30) avec des glissières droites (30, 32) entre celles-ci.

23. Procédé de fonctionnement d'une installation selon l'une ou plusieurs des revendications précédentes, avec au moins un alignement du bord des articles, où un article reposant sur un substrat plan présentant une vitesse, en particulier une première vitesse toujours constante v1, et maintenu au moins temporairement sur celui-ci, est amené contre au moins une butée d'alignement sur au moins un de ses bords dans au moins une installation effectuant un alignement, ladite butée d'alignement se déplaçant avec une autre vitesse, en particulier une deuxième vitesse toujours constante v2.

24. Procédé selon la revendication 23, **caractérisé en ce que** le processus d'alignement décrit est exécuté plusieurs fois successivement.

25. Procédé selon la revendication 23 ou 24, **caractérisé en ce que** la vitesse v1 est supérieure ou inférieure à la vitesse v2.

26. Procédé selon l'une quelconque des revendications précédentes 23 à 25, **caractérisé en ce que** pendant le rapprochement du bord de l'article vers la butée d'alignement, l'article accomplit une course supérieure à 10 %, en particulier supérieure à 33 % de la longueur de l'article en forme de plaque dans la direction de transport.

27. Procédé selon l'une quelconque des revendications précédentes 23 à 26, **caractérisé en ce que** pendant l'alignement et la butée du bord de l'article contre la butée d'alignement, celle-ci se déplace le long d'une voie plane.

28. Procédé selon l'une quelconque des revendications 23 à 27, **caractérisé en ce que** le substrat plan forme une partie d'une première trajectoire fermée.

29. Procédé selon l'une quelconque des revendications précédentes 23 à 28, **caractérisé en ce que** la voie plane forme une partie d'une deuxième trajectoire fermée.

30. Procédé selon l'une quelconque des revendications précédentes 23 à 29, **caractérisé en ce qu'**un article reposant contre la butée d'alignement par au moins un de ses bords et aligné en conséquence, en particulier aligné avec précision, est maintenu avec conservation de position sur sa face supérieure et/ou sa face inférieure au moyen d'un dispositif de transfert, son transport ultérieur étant exécuté par celui-ci en quittant la butée d'alignement.
